# FASCICULE DE BREVET EUROPEEN

(11) **EP 2 046 021 B1**
(45) Date de publication et mention de la délivrance du brevet: **16.07.2014**
(21) Numéro de dépôt: 08165333.9
(22) Date de dépôt: 29.09.2008
(51) Int. Cl.: H04N 5/32

(54) **Matrice de pixels avec compensation de chûte ohmique sur des alimentations**
Pixelmatrix mit Kompensation von Ohmschem Spannungsabfall auf ihren Stromzuleitungen
Pixel matrix with ohmic drop compensation on the power supplies

(30) Priorité: 01.10.2007 FR 0757976
(43) Date de publication de la demande: 08.04.2009
(73) Titulaire: Commissariat à l'Énergie Atomique et aux Énergies Alternatives, 75015 Paris (FR)
(72) Inventeur: Peizerat, Arnaud, 38000 Grenoble (FR); Arques, Marc, 38100 Grenoble (FR); Martin, Jean-Luc, 38620 Saint Geoire en Valdaine (FR)
(74) Mandataire: Ilgart, Jean-Christophe

(56) Documents cités:
- US-A1- 2003 146 389

## Description

### DOMAINE TECHNIQUE

L'invention est relative au domaine des dispositifs microélectroniques formés de cellules élémentaires ou pixels agencé(e)s en matrice et s'applique en particulier aux matrices de grandes tailles dotées dans chaque pixel d'une source de courant, par exemple aux matrices de détecteurs de rayons X.

L'invention permet d'obtenir une homogénéité de consommation et de performances entre les pixels ou cellules élémentaires d'un dispositif matriciel dans lequel les cellules sont dotées respectivement d'une source de courant.

L'invention prévoit la mise en oeuvre d'un dispositif microélectronique matriciel formé de cellules élémentaires comportant respectivement une source de courant dont la consommation dépend d'une différence de deux potentiels de polarisation, et de moyens pour compenser une chute ohmique le long d'une ou plusieurs lignes acheminant l'un desdits deux potentiels aux pixels.

### ÉTAT DE LA TECHNIQUE ANTÉRIEURE

Dans un dispositif microélectronique matriciel, tel qu'une matrice de détecteurs de rayons X, la lecture des signaux issus des cellules élémentaires ou pixels de la matrice, est généralement réalisée par balayage des lignes ou rangées horizontales de la matrice. Une sélection d'une ligne donnée ou rangée horizontale donnée de la matrice peut par exemple permettre d'obtenir sur les colonnes ou rangées verticales de la matrice, les signaux de sortie issus des pixels de cette ligne donnée.

Les tensions d'alimentation ou de pilotage sont acheminées aux pixels, à l'aide d'un réseau conducteur qui peut être par exemple sous forme de lignes conductrices, ou de grilles conductrices. Les tensions d'alimentation ou de pilotage subissent des chutes ohmiques le long de ce réseau conducteur, qui peuvent, sur des matrices de taille importante, atteindre plusieurs dizaines de millivolts ou davantage.

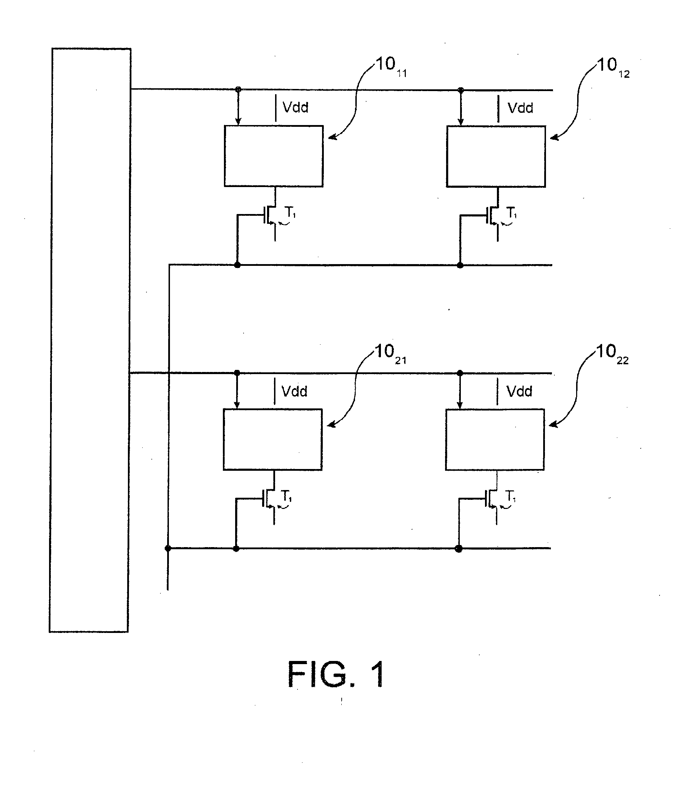

Un exemple de dispositif microélectronique matriciel de détection de rayons X, formé d'une matrice 2*2, de 2 rangées horizontales et de 2 rangées verticales de cellules élémentaires également appelés pixels 10₁₁, 10₁₂, 10₂₁, 10₂₂, est illustré sur la figure 1. Dans ce dispositif, la consommation de chaque pixel est principalement celle d'une source de courant formée par un transistor T₁. Cette source de courant n'est activée que lorsqu'une rangée horizontale ou ligne de la matrice est sélectionnée. Le courant délivré par cette source de courant dépend de la tension Vgs = (Vg-Vs) de ce transistor T₁.

Dans le cas où le transistor T₁ source de courant est polarisé en faible inversion, son courant Ids entre drain et source peut être défini par la relation suivant Ids=(I₀*e^{(vgs/(kT/q)})
avec :
I₀ : une constante dépendant notamment de la géométrie du transistor T,
K : la constante de Boltzmann,
T : la température en kelvins,
q : la charge.

Cette relation montre que le courant Ids est susceptible de varier très rapidement, par exemple d'un facteur 2 pour une variation de la tension grille-source Vgs relativement faible, de l'ordre de 18 mV, à température ambiante.

Dans un cas où le transistor T₁ est polarisé en forte inversion, l'équation définissant le courant Ids est différente, mais le problème reste le même. L'application du potentiel Vg sur la grille du transistor T₁, entraine très peu de consommation de courant au niveau de la grille. Ainsi, sur un réseau conducteur délivrant le potentiel Vg à l'ensemble des grilles des transistors T₁ jouant le rôle de source de courant, la chute ohmique est relativement faible. En revanche, l'application du potentiel Vs à la source du transistor T₁ entraine davantage de consommation de courant au niveau de la source. Le réseau conducteur correspondant destiné à acheminer le courant Ids issu de la source du transistor T₁ peut être alors soumis à des chutes ohmiques importantes et différer de manière importante en fonction de l'emplacement du transistor dans la matrice.

Il se pose le problème de trouver un nouveau dispositif microélectronique matriciel, en particulier de détection de rayonnement électromagnétique, par exemple de rayonnement X, dont les cellules élémentaires ou pixels sont dotées respectivement d'une source de courant, et qui ne présente pas les inconvénients mentionnés ci-dessus.

### EXPOSÉ DE L'INVENTION

L'invention selon l'une des revendications 1 ou 4 concerne un dispositif microélectronique matriciel comprenant :
- une pluralité de cellules élémentaires agencées selon une matrice, comportant respectivement au moins une source de courant formée d'au moins un transistor source de courant,
- une électrode de source dudit transistor étant connectée à une ligne conductrice de polarisation de sources parmi une pluralité de lignes conductrices de polarisation de sources,
- une électrode de grille dudit transistor étant connectée à une ligne conductrice de polarisation de grille parmi une pluralité de lignes conductrices de polarisation de grilles, le dispositif étant doté en outre de moyens de polarisation de lignes conductrices de polarisation de grille comprenant :
- au moins une première ligne de connexion susceptible d'être connectée à une ou plusieurs desdites lignes conductrices de polarisation de grille,
- des moyens générateurs, de courant ou de tension, placés à au moins une extrémité de ladite première ligne de connexion, et prévus pour générer une évolution, par exemple une décroissance, de potentiels le long de ladite première ligne de connexion.

Les lignes de polarisation de grille sont prévues pour connecter les électrodes de grilles respectives des transistors générateurs de courant respectifs des cellules d'une rangée de cellules de la matrice.

Les lignes de polarisation de source sont prévues pour connecter les électrodes de sources respectives des transistors générateurs de courant respectifs des cellules d'une rangée de cellules de la matrice.

La consommation des transistors sources de courant dépend notamment d'une différence entre le potentiel de grille et le potentiel de source de ces transistors. La présente invention prévoit ainsi la mise en oeuvre de moyens pour compenser une chute ohmique le long d'une ou plusieurs lignes acheminant le potentiel de source des transistors de courant en créant une décroissance correspondante des potentiels de grilles, afin d'obtenir une différence de potentiels entre grille et source, constante d'un transistor source de courant à l'autre. Les moyens générateurs sont prévus de sorte que l'évolution de potentiels le long de ladite première ligne de connexion, est apte à compenser la décroissance de potentiels de sources le long d'une ou plusieurs ligne(s) de polarisation de source.

Selon une première possibilité de mise en oeuvre, les moyens générateurs sont constamment connectés à la première ligne de connexion et sont sous forme de moyens générateurs de tension comprenant des moyens pour appliquer un premier potentiel vg₁ à une première extrémité de ladite première ligne de connexion et des moyens pour appliquer un deuxième potentiel vg₂ à une deuxième extrémité de ladite première ligne de connexion, opposée à la première extrémité.

Le premier potentiel vg₁ et le deuxième potentiel vg₂, peuvent être prévus en fonction d'au moins une estimation d'une diminution de potentiel entre les extrémités d'au moins une ligne de polarisation de source.

Cette estimation peut avoir été réalisée expérimentalement ou à l'aide d'un outil informatique de simulation.

Selon une deuxième possibilité de mise en oeuvre, les moyens générateurs sont des moyens générateurs d'un courant de référence, une ou plusieurs rangées de la matrice comprenant en outre : au moins un transistor supplémentaire agencé de manière à former des miroirs de courant, respectivement avec les transistors générateurs de courant des cellules de ladite rangée de la matrice, le courant de référence servant de courant d'entrée auxdits miroirs de courants.

Selon cette deuxième possibilité de mise en oeuvre, ladite première ligne de connexion est connectée à une ligne conductrice de polarisation de grille, lorsque les cellules connectées à cette ligne conductrice de polarisation de grille sont sélectionnées et délivrent leur signal de sortie.

Les lignes de polarisation de source peuvent être reliées entre elles par l'intermédiaire d'une deuxième ligne de connexion, les transistors supplémentaires étant disposés le long d'une ligne conductrice supplémentaire connectée à ladite deuxième ligne de connexion.

La ligne conductrice supplémentaire, peut être identique aux lignes conductrices de polarisation de source.

Selon une possibilité, une ou plusieurs rangées de la matrice peuvent comprendre en outre : des moyens interrupteurs commandés par un signal de sélection de rangée de cellules, aptes à transmettre, en fonction de l'état dudit signal de sélection, ledit courant de référence en entrée des miroirs de courant d'une rangée. Les moyens interrupteurs peuvent être sous forme d'au moins un transistor interrupteur.

Selon une mise en oeuvre possible, le gain en courant des miroirs de courant peut être égal à 1/K (avec K > 1), la ligne conductrice supplémentaire ayant une résistance linéique égale ou de l'ordre de 1/K la résistance linéique des lignes de polarisation de source. Cela permet de diminuer l'impédance sous laquelle les potentiels de grilles sont délivrés.

Ladite première ligne de connexion peut être prévue avec une résistance linéique identique ou sensiblement égale à la résistance linéique respective desdites lignes de polarisation de source.

Les transistors d'une succession de transistors sources de courant peuvent avoir respectivement une électrode de source connectée à une même ligne conductrice de polarisation de source, et une électrode de grille connectée respectivement à une desdites lignes conductrices de polarisation de grille.

Les moyens générateurs et ladite première ligne de connexion peuvent être prévus pour placer les potentiels d'électrodes de grilles desdites électrodes de grille de ladite succession de transistors, à des potentiels différents décroissants.

### BRÈVE DESCRIPTION DES DESSINS

La présente invention sera mieux comprise à la lecture de la description d'exemples de réalisation donnés, à titre purement indicatif et nullement limitatif, en faisant référence aux dessins annexés sur lesquels :
- la figure 1 illustre un dispositif microélectronique matriciel suivant l'art antérieur ;
- la figure 2 illustre un premier exemple de dispositif microélectronique matriciel suivant l'invention ;
- la figure 3 illustre un deuxième exemple de dispositif microélectronique matriciel suivant l'invention.

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

Un exemple de dispositif microélectronique matriciel suivant l'invention, va à présent être donné. Ce dispositif comprend une matrice de n rangées horizontales et m rangées verticales de cellules élémentaires 100₁₁, 100₁₂, ..., 100₂₁, 100₂₂, ..., 100ᵢⱼ, 100ₘₙ, avec n qui peut être égal à m, et par exemple compris entre 1 et 10000, par exemple égal à 2000.

Les cellules élémentaires peuvent être par exemple des pixels de capteur de rayonnement électromagnétique et peuvent comprendre respectivement au moins un élément détecteur de rayonnement électromagnétique, par exemple un détecteur de rayons X, ainsi qu'au moins un circuit électronique associé au détecteur.

Selon une variante, les cellules élémentaires peuvent être par exemple des cellules d'une matrice de lecture, les cellules étant associées respectivement à un élément photoconducteur, par exemple de type CdTe, CdZnTe, PbI2, HgI2, PbO, Se, hybridé ou assemblé ou déposé sur la matrice.

L'invention peut s'appliquer à d'autres types de dispositifs microélectroniques matriciels de grande taille, en particuliers à des matrices de pixels dotés respectivement d'une source de courant.

La matrice de cellules élémentaires peut avoir une taille, importante, par exemple de l'ordre d'une dizaine de centimètres carré ou de plusieurs centaines de centimètres carrés, par exemple une dimension de l'ordre de 10 cm x 10 cm ou de 20 cm x 20 cm.

Dans le cas d'une matrice de détecteurs de rayons X, les cellules élémentaires peuvent comprendre respectivement un photodétecteur sensible à la lumière visible par exemple sous forme d'une photodiode, ou d'un phototransistor, couplé(e) à une ou plusieurs couches scintillatrices à base de CsI, ou de Gd₂O₂S par exemple, qui permettent la détection des photons X et les transforment en photons visibles. Des composants, par exemple réalisés en technologie CMOS, assurent la détection en transformant les photons visibles en charges électriques.

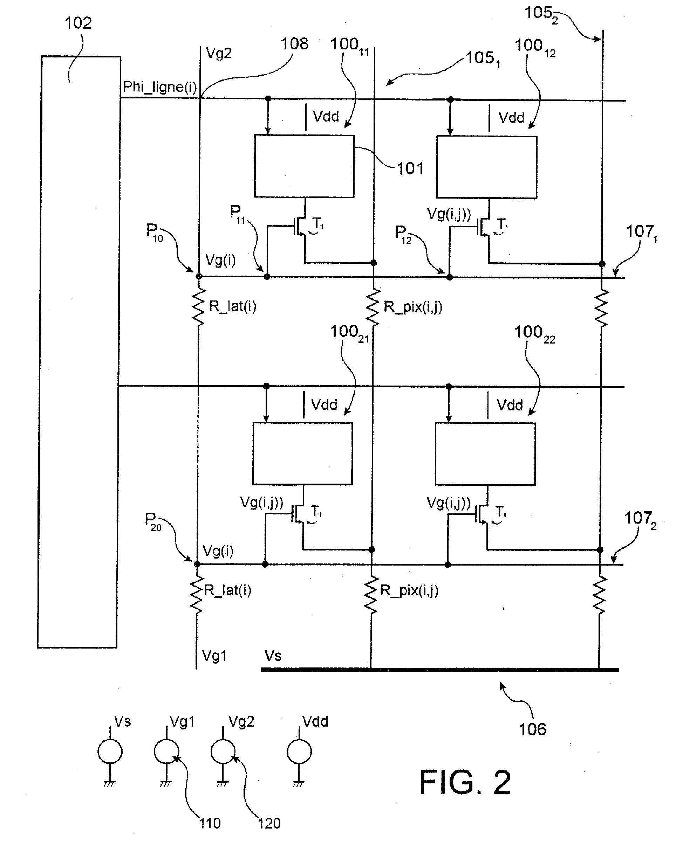

Sur la figure 2, un exemple de réalisation, est donné avec n = 2 et m = 2 cellules élémentaires ou pixels 100₁₁, 100₁₂, 100₂₁, 100₂₂.

Chaque cellule élémentaire ou pixel du dispositif matriciel peut comporter par exemple une photodiode, ainsi qu'une pluralité de transistors (la photodiode et les transistors de chaque pixel étant schématisés sous forme d'un bloc référencé 101 sur la figure 2). Le dispositif comporte également un ou plusieurs circuits d'adressage et notamment au moins un circuit d'adressage 102 des lignes ou rangées horizontales de la matrice, formé par exemple d'un ou plusieurs registres à décalage. Selon une possibilité de mise en oeuvre du dispositif, la lecture des grandeurs détectées par les pixels et traduites sous formes de signaux, peut être réalisée ligne par ligne, à l'aide d'un signal de sélection Phi_ligne(i) d'une rangée i (avec 1 ≤ i ≤ n) généré par le circuit d'adressage 102.

Des lignes de données (non représentées sur cette figure) sont prévues pour acheminer les signaux issus des cellules ou pixels d'une rangée verticale ou colonne de la matrice, ces signaux étant ensuite multiplexés.

Un ou plusieurs transistors de chaque pixel peuvent être reliés à une ligne de polarisation délivrant un potentiel d'alimentation Vdd.

Chaque cellule ou pixel de la matrice comporte également une source de courant, qui peut être sous forme d'un transistor T₁, polarisé de manière à être en régime de saturation.

Des lignes conductrices 105₁, 105₂, par exemple verticales, sont prévues pour servir de ligne de polarisation des sources respectives des transistors T₁ de chaque pixel d'une rangée, par exemple verticale, de la matrice. Les lignes conductrices 105₁, 105₂ de polarisation de source peuvent être connectées entre elles en bord de matrice, à l'aide d'une zone de connexion 106. Les lignes 105₁, 105₂, de polarisation de source ont respectivement une résistance linéique notée R_pix(i,j). Le long des lignes de polarisation 105₁, 105₂ de source, le potentiel des électrodes de source des transistors T₁ est susceptible de décroître.

La zone de connexion 106 peut être sous forme d'au moins une ligne conductrice perpendiculaire aux lignes 105₁, 105₂, de polarisation de source, mise à un potentiel Vs par exemple de l'ordre de 0 V, et prévue suffisamment conductrice(s), pour que les différences de potentiels aux points d'interconnexion entre les lignes conductrice 105₁, 105₂, et la connexion 106 soient négligeables, par exemple au moins inférieures à 1 mV.

Selon une possibilité, pour rendre la zone de connexion 106 suffisamment conductrice par rapport aux lignes conductrices 105₁, 105₂, ou permettre à la zone de connexion 106 de véhiculer un courant plus important que les lignes conductrices 105₁, 105₂, on peut concevoir la zone de connexion 106 plus large, par exemple une ou plusieurs dizaines de fois plus large, que les lignes conductrices 105₁, 105₂. La zone de connexion 106 peut être prévue par exemple, avec une largeur de l'ordre de 100 µm tandis que les lignes conductrices 105₁, 105₂ sont prévues avec une largeur de l'ordre de 2 µm.

On peut également mettre en oeuvre, la zone de connexion 106 sur davantage de niveaux métalliques d'interconnexion que les lignes conductrices 105₁, 105₂. Par exemple, la zone de connexion 106 peut être mise en oeuvre sur 2 niveaux d'interconnexions d'une technologie CMOS, tandis que les lignes conductrices 105₁, 105₂ sont mises en oeuvre sur un seul niveau.

La zone de connexion peut comporter des plots de connexion régulièrement répartis le long d'une ligne conductrice.

Des lignes conductrices 107₁, 107₂, par exemple horizontales, sont prévues pour servir de lignes de polarisation des grilles respectives des transistors T₁ source de courant de chaque pixel d'une rangée, par exemple horizontale, de la matrice. Ces lignes conductrices 107₁, 107₂ peuvent être connectées entre elles, à l'aide d'une zone de connexion 108. La zone de connexion 108 peut être sous forme d'au moins une deuxième ligne conductrice, orthogonale aux lignes 107₁, 107₂, de polarisation de grille. La zone de connexion 108 peut avoir une résistance linéique R_lat(i) prévue de sorte que le rapport R_lat(i)/R_pix(i,j) est constant. Les lignes conductrices 105₁, 105₂ et la ligne conductrice 108 peuvent être conçues de sorte que le rapport R_lat(i)/R_pix(i,j) est égal 1. Dans ce cas, la zone de connexion 108 peut être sous forme d'une ligne conductrice, identique aux lignes conductrices 105₁, 105₂.

La ligne conductrice 108 a une extrémité mise à un premier potentiel Vg₁, à l'aide de moyens générateurs comportant des moyens 110 permettant de délivrer le premier potentiel Vg₁ et une autre extrémité mise à un deuxième potentiel, par exemple laissée libre ou connectée à des moyens 120 permettant de délivrer un deuxième potentiel Vg₂ différent du premier potentiel. Le deuxième potentiel Vg₂ peut être appliqué à l'aide desdits moyens générateurs comportant des moyens 120 permettant de délivrer le deuxième potentiel Vg₂. Selon un exemple, lorsque Vs est de l'ordre de 0 V, que Rlat est de l'ordre de 1 Ω, un courant de pixel de l'ordre de 0,1 mA et un nombre de lignes de l'ordre de 20001es potentiels Vg₂ et Vg₁ peuvent être de l'ordre de 0,7 Volts et de 0,5 Volts.

En appliquant des potentiels Vg₁ et Vg₂ différents aux extrémités de la ligne conductrice 108, on force l'établissement d'un courant dans cette ligne conductrice 108 qui est connectée à la grille des transistors T₁ source de courant. On créé une évolution de potentiel ou une variation de potentiel ou une décroissance de potentiel, le long de la ligne conductrice 108, de manière à obtenir un potentiel différent à l'intersection de chaque ligne conductrice 107₁, 107₂ de grille avec la deuxième ligne conductrice.

Sur le dispositif de la figure 2, le potentiel à un point P₁₀, à l'intersection de la première zone de connexion 108 et d'une ligne de polarisation de grille 107₁, est différent du potentiel à un point P₂₀, à l'intersection de la première zone de connexion 108 et d'une autre ligne de polarisation de grille 107₂.

Le potentiel le long de chaque ligne conductrice 107₁, 107₂ de grille est quant à lui sensiblement le même sur toute sa longueur, dans la mesure où la tension de grille des transistors T₁ source de courant, induit peu de consommation. Par exemple, le potentiel à un point P₁₀, à l'intersection de la première zone de connexion 108 et d'une ligne de polarisation de grille 107₁, est sensiblement égal au potentiel à un deuxième point P₁₁ de la ligne de polarisation de grille 107₁, situé à la grille d'un transistor T₁ source de courant, et sensiblement égal au potentiel à un troisième point P₁₂ de la ligne de polarisation de grille 107₁, situé à la grille d'un autre transistor T₁ source de courant.

On peut prévoir les deux potentiels Vg₂ et Vg₁, en fonction d'une estimation de la chute de potentiel entre les extrémités respectives des lignes de polarisation de source 105₁, 105₂.

Cette estimation peut être réalisée expérimentalement ou par exemple par simulation informatique à l'aide d'un logiciel tel que Pspice de la société Cadence ou Eldo de la société Mentor Graphics.

On peut par exemple régler les deux potentiels Vg₂ et Vg₁, de sorte que la différence Vg₂ - Vg₁ entre les deux potentiels, soit égale à une estimation de Vs(N) - Vs(1) où 1 et N désignent les pixels aux extrémités d'une rangée verticale de la matrice.

De cette manière, on peut compenser une chute ohmique le long des lignes 105₁, 105₂, acheminant le potentiel de source à une rangée verticale de pixels de la matrice, en générant une évolution ou une décroissance de potentiel correspondante sur une ligne conductrice perpendiculaire aux lignes acheminant le potentiel de grille. On peut obtenir ainsi une différence entre potentiel de grille et potentiel de source Vg-Vs, sensiblement égale pour tous les transistors T₁ source de courant. On peut ainsi obtenir une consommation sensiblement constante d'un pixel à l'autre de la matrice.

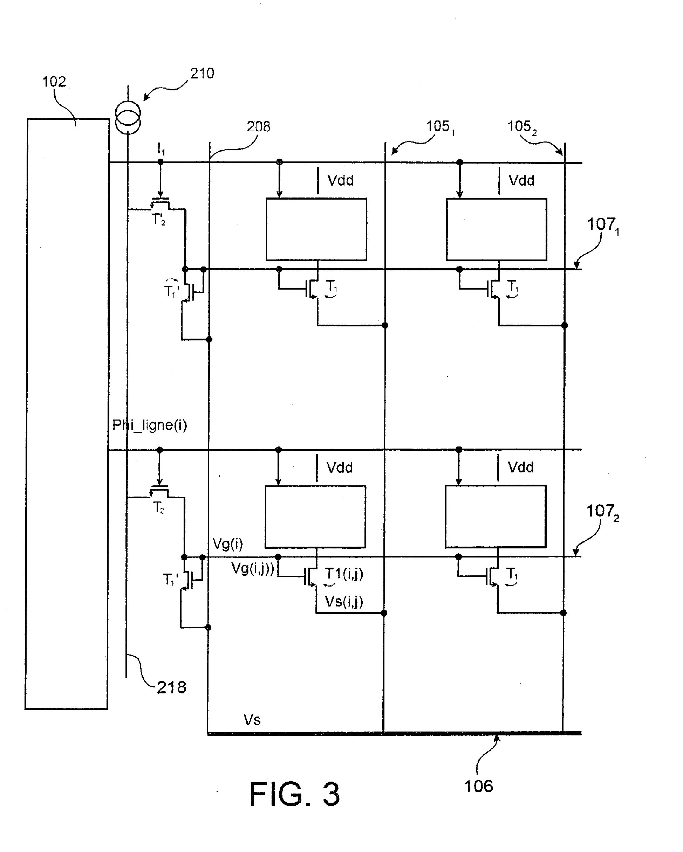

Un deuxième exemple de dispositif suivant l'invention est illustré sur la figure 3.

Ce dispositif diffère de celui décrit précédemment, notamment en ce qu'il comporte une ligne conductrice référencée 208 (la ligne conductrice 108 ayant été supprimée), qui est connectée à la première zone de connexion 106 reliant les lignes conductrices 105₁, 105₂ de polarisation de source. La ligne conductrice 208 est de préférence identique aux lignes conductrices 105₁, 105₂ de source, en particulier en termes de résistance linéique, et peut être parallèle à ces dernières.

Le dispositif est également doté de moyens 210 formant une source de courant I₁, par exemple à l'aide d'un transistor polarisé de manière à fonctionner en saturation, par exemple un transistor PMOS avec une grille mise à un potentiel Vref et un drain à un potentiel Vdd. La source 210 de courant peut être placée à l'extrémité d'une ligne conductrice 218. Le courant I₁ peut être délivré aux grilles respectives des transistors T₁ source de courant des pixels de la matrice lorsque ces transistors ont été sélectionnés et qu'ils délivrent alors un signal de sortie et débitent du courant.

Pour cela, des transistors interrupteurs T'₂ peuvent être prévus. Les transistors interrupteurs T'₂ peuvent être commandés par le signal de sélection phi_ligne d'une ligne ou d'une rangée horizontale de pixels de la matrice. Les transistors interrupteurs T'₂ peuvent être dotés par exemple d'une électrode de grille connectée à une sortie du circuit d'adressage délivrant le signal phi_ligne de sélection de ligne, une électrode de source connectée à la sortie des moyens générateurs 210 de courant I₁, et une électrode de drain connectée à une ligne de grille 107₁ ou 107₂. Le dispositif peut être prévu de sorte qu'il comporte un transistor interrupteur T'₂ par ligne ou rangée horizontale, apte à connecter la source de courant 210 à une ligne conductrice de grille 107₁, 107₂ de cette ligne ou rangée de la matrice sélectionnée.

Chaque rangée de la matrice peut comporter également un transistor T'₁ supplémentaire monté en diode, dont l'électrode de source est connectée à la ligne conductrice 208 et dont les électrodes de grille et de drain sont connectées entre elles et à une ligne de polarisation de grille parmi les lignes de polarisation 107₁, 107₂ de grille.

Le transistor T'₁ d'une rangée horizontale ou ligne de la matrice est agencé de manière à former un montage en miroir de courant, avec chacun des transistors générateurs de courants T₁ de cette rangée horizontale ou ligne de la matrice.

Le fonctionnement d'un tel dispositif peut être le suivant :

Lorsqu'une ligne i de la matrice est sélectionnée, le courant I₁ généré par les moyens générateurs 210 de courant, passe à travers le transistor interrupteur T'₂ qui a été rendu passant par activation du signal de sélection de ligne phi_ligne. Ce courant I₁ est évacué par la ligne conductrice 208 vers le potentiel Vs.

Les miroirs de courant d'une ligne, sont formés respectivement par un transistor T'₁ monté en diode, et un transistor T₁ source de courant.

La ligne conductrice 208 peut être identique ou sensiblement identique aux lignes de polarisation 105₁, 105₂ de source, en particulier en termes de résistance linéique, et les miroirs de courant mis en oeuvre de sorte que le courant I₁ est égal aux courants délivrés par les pixels, le potentiel de source du transistor T'₁, monté en diode, s'établissant à la même valeur que les potentiels de source respectifs des transistors T₁ source de courant de cette même ligne.

Selon une autre possibilité, les moyens générateurs 210 de courant I₁ peuvent être prévus de manière à ce qu'il y ait un rapport égal à K entre le courant I₁ d'entrée du miroir de courant et le courant de sortie du miroir de courant, débité par le transistor T₁ source de courant des pixels.

Dans ce cas, le gain des miroirs de courant formés par le transistor T'₁ et T₁ est de préférence prévu égal à 1/K, tandis que la ligne conductrice 208 peut également être prévue de manière à avoir une résistance linéique K fois inférieure à celle des lignes conductrices 105₁, 105₂ de polarisation de source. Cela peut permettre de diminuer l'impédance sous laquelle les tensions de grilles sont délivrées. Pour obtenir, des miroirs de courants avec de tels gains, on peut adapter les dimensions W et L, de largeur de canal et de longueur de canal des transistors, de sorte que le courant I₁ est K fois supérieur au courant issus des transistors source de courant T₁.

Dans les deux exemples de réalisation qui viennent d'être donnés, on utilise une ligne conductrice en bord de matrice, susceptible d'être connectée aux lignes de polarisation de grille, et dans laquelle on crée une évolution de tension qui peut être identique ou proportionnelle à celle existant dans les lignes de polarisation de source de la matrice.

On compense ainsi les phénomènes de chutes ohmiques le long des lignes de source et on maintient un écart constant sur les différents pixels, entre le potentiel de source et le potentiel de grille du transistor source de courant.

## Revendications

1. Dispositif microélectronique matriciel comprenant :
- une pluralité de cellules élémentaires (100₁₁, 100₁₂, 100₂₁, 100₂₂) agencées selon une matrice, comprenant chacune une source de courant formée d'au moins un transistor (T₁) source de courant,
le transistor (T₁) comportant une électrode de source connectée à une ligne conductrice de polarisation de sources donnée parmi une pluralité de lignes (105₁, 105₂) conductrices de polarisation de sources, chaque ligne de polarisation de source étant connectée aux électrodes de sources respectives de transistors générateurs de courant respectifs des cellules d'une rangée verticale de cellules de la matrice, lesdites lignes de polarisation de sources étant reliées à une zone de connexion (106) disposée en bord de matrice et mise à un potentiel Vs,
le transistor (T₁) comportant en outre une électrode de grille connectée à une ligne conductrice (107₁, 107₂) de polarisation de grille donnée parmi une pluralité de lignes conductrices de polarisation de grilles, chaque ligne de polarisation de grille étant connectée aux électrodes de grilles respectives des transistors générateurs de courant respectifs des cellules d'une rangée horizontale de cellules de la matrice, le dispositif comprenant en outre des moyens de polarisation des lignes conductrices de polarisation de grille comprenant :
- au moins une première ligne de connexion (108) connectée auxdites lignes conductrices de polarisation de grille,
- des moyens pour générer une variation de potentiels le long de ladite première ligne de connexion, proportionnelle ou identique à la variation de potentiels dans les lignes de polarisation de source,
lesdits moyens comprenant des moyens générateurs de tension, connectés à la première ligne de connexion (108), pour appliquer un premier potentiel (vg₁, Vs(i,j) et un deuxième potentiel (Vg2, Vs) entre une première extrémité et une deuxième extrémité de ladite deuxième ligne de connexion, le premier potentiel étant différent du deuxième potentiel, ladite première ligne de connexion (108) ayant en outre une résistance linéique (R_lat(i)) identique ou sensiblement égale ou proportionnelle à la résistance linéique respective (R_pix(i,j)) desdites lignes (105₁, 105₂) de polarisation de source.

2. Dispositif microélectronique matriciel selon la revendication 1, dans lequel le premier potentiel (vg₁) et le deuxième potentiel (vg₂), sont prévus en fonction d'au moins une estimation d'une diminution de potentiel entre les extrémités d'au moins une ligne de polarisation de source.

3. Dispositif microélectronique matriciel selon la revendication 1 ou 2, la première ligne de connexion (108) étant identique aux lignes de polarisation de source (105₁, 105₂).

4. Dispositif microélectronique matriciel comprenant :
- une pluralité de cellules élémentaires (100₁₁, 100₁₂, 100₂₁, 100₂₂) agencées selon une matrice, comprenant chacune une source de courant formée d'au moins un transistor (T₁) source de courant,
le transistor (T₁) comportant une électrode de source connectée à une ligne conductrice de polarisation de sources donnée parmi une pluralité de lignes (105₁, 105₂) conductrices de polarisation de sources, chaque ligne de polarisation de source étant connectée aux électrodes de sources respectives de transistors générateurs de courant respectifs des cellules d'une rangée verticale donnée de cellules de la matrice, lesdites lignes de polarisation de sources étant reliées à une zone de connexion (106) disposée en bord de matrice et mise à un potentiel Vs,
le transistor (T₁) comportant en outre une électrode de grille connectée à une ligne conductrice (107₁, 107₂) de polarisation de grille donnée parmi une pluralité de lignes conductrices de polarisation de grilles, chaque ligne de polarisation de grille étant connectée aux électrodes de grilles respectives des transistors générateurs de courant respectifs des cellules d'une rangée horizontale de cellules de la matrice,
le dispositif comprenant en outre des moyens de polarisation des lignes conductrices de polarisation de grille comprenant :
- au moins une première ligne de connexion (208),
- dans une ou plusieurs rangées de la matrice : au moins un transistor (T'₁) supplémentaire agencé de manière à former des miroirs de courant, respectivement avec les transistors générateurs de courant (T₁) des cellules d'une rangée horizontale de la matrice, le transistor (T'₁) supplémentaire comportant une électrode de source connectée à ladite première ligne de connexion,
- des moyens pour générer une variation de potentiels le long de ladite première ligne de connexion, proportionnelle ou identique à la variation de potentiel dans les lignes de polarisation de source, les moyens pour générer une variation de potentiels comprenant des moyens générateurs (210) de courant pour générer un courant I₁ à travers ladite première ligne de connexion (208) vers ladite zone de connexion (106) mise au potentiel Vs, ladite première ligne de connexion (208) étant prévue avec une résistance linéique (R_lat(i)) identique ou sensiblement égale ou proportionnelle à la résistance linéique respective (R_pix(i,j)) desdites lignes (105₁, 105₂) de polarisation de source, ledit courant I₁ servant de courant d'entrée auxdits miroirs de courant.

5. Dispositif microélectronique matriciel selon la revendication 4, une ou plusieurs rangées de la matrice comprenant en outre : des moyens interrupteurs (T'₂) commandés par un signal de sélection (phi_ligne(i)) de rangée de cellules, aptes à transmettre, en fonction de l'état dudit signal de sélection, ledit courant en entrée des miroirs de courant d'une rangée.

6. Dispositif microélectronique matriciel selon l'une des revendications 4 ou 5, le gain en courant des miroirs de courant étant égal à 1/K (avec K > 1), la première ligne de connexion (208) ayant une résistance linéique K fois inférieure à celle des lignes de polarisation de source (105₁, 105₂).

7. Dispositif microélectronique matriciel selon l'une des revendications 4 ou 5, le gain en courant des miroirs de courant étant égal à 1, la première ligne de connexion (208) étant identique aux lignes de polarisation de source (105₁, 105₂).

8. Dispositif microélectronique matriciel selon l'une des revendications 1 à 7, la première ligne de connexion (108, 208) étant parallèle aux lignes conductrices de polarisation de source (105₁, 105₂).

## Patentansprüche

1. Mikroelektronische Marixanordnung, welche Folgendes aufweist:
- eine Vielzahl an Elementarzellen (100₁₁, 100₁₂, 100₂₁, 100₂₂), welche gemäß einer Matrix angeordnet sind, wobei jede Zelle eine Stromquelle aufweist, welche zumindest einen Stromquellen-Transistor (T₁) bildet,
wobei der Transistor (T₁) eine Source-Elektrode aufweist, welche mit einer aus einer Vielzahl von Leiterbahnen (105₁, 105₂) zur Source-Polarisation gegebenen Source-Polarisations-Leiterbahn verbunden ist, wobei jede Source-Polarisationsleitung mit jeweiligen Source-Elektroden der jeweiligen Stromgenerator-Transistoren der Zellen einer vertikalen Zellenreihe der Matrix verbunden ist, wobei die Source-Polarisationsleitungen an eine Anschluss- bzw. Verbindungszone (106) angeschlossen sind, welche an der Matrix angeordnet ist und auf ein Potential Vs gelegt wird,
wobei der Transistor (T₁) darüber hinaus eine Gate-Elektrode aufweist, welche mit einer aus einer Vielzahl von Gate-Polarisations-Leiterbahnen gegebenen Gate-Polarisations-Leiterbahn (107₁, 107₂) verbunden ist, wobei jede Gate-Polarisations-Leiterbahn mit jeweiligen Gate-Elektroden der jeweiligen Stromgenerator-Transistoren der Zellen einer horizontalen Zellenreihe der Matrix verbunden ist, wobei die Anordnung darüber hinaus Mittel zur Polarisation der Gate-Polarisations-Leiterbahnen aufweist, welche Folgendes umfassen:
- mindestens eine erste Anschlussleitung (108), welche mit den Leiterbahnen zur Gate-Polarisation verbunden sind,
- Mittel zur Erzeugung einer Potentialveränderung entlang der ersten Anschlussleitung, welche proportional zu oder identisch mit der Potentialveränderung in den Source-Polarisations-Leiterbahnen ist,
wobei die Mittel Mittel zur Erzeugung von Spannung aufweisen, welche mit der ersten Anschlussleitung (108) verbunden sind, um ein erstes Potential (vg₁, Vs(i,j) und ein zweites Potential (Vg₂, Vs) zwischen einem ersten Ende und einem zweiten Ende der zweiten Anschlussleitung anzulegen, wobei sich das erste Potential von dem zweiten Potential unterscheidet, wobei die erste Anschlussleitung (108) darüber hinaus einen Linearwiderstand (R_lat (i)) aufweist, welcher identisch oder im Wesentlichen gleich oder proportional zu dem jeweiligen Linearwiderstand (R_pix (i, j)) der Source-Polarisations-Leiterbahnen (105_{1,} 105₂) ist.

2. Mikroelektronische Matrixanordnung nach Anspruch 1, in welcher das erste Potential (vg₁) und das zweite Potential (vg₂) in Abhängigkeit von mindestens einer Schätzung einer Verringerung des Potentials zwischen den Enden zumindest einer Source-Polarisations-Leiterbahn vorgesehen sind.

3. Mikroelektronische Matrixanordnung nach Anspruch 1 oder 2, wobei die erste Anschlussleitung (108) identisch mit den Source-Polarisations-Leiterbahnen (105_{1,} 105₂) ist.

4. Mikroelektronische Matrixanordnung, welche Folgendes aufweist:
- eine Vielzahl von Elementarzellen (100₁₁, 100₁₂, 100₂₁, 100₂₂), welche gemäß einer Matrix angeordnet sind, wobei jede Elementarzelle eine Stromquelle aufweist, welche zumindest einen Stromquellen-Transistor (T₁) bildet,
wobei der Transistor (T₁) eine Source-Elektrode aufweist, welche mit einer aus einer Vielzahl von Source-Polarisations-Leiterbahnen (105₁, 105₂) gegebenen Source-Polarisations-Leiterbahn verbunden ist, wobei jede Source-Polarisations-Leiterbahn mit jeweiligen Source-Elektroden der jeweiligen Transistor-Stromgeneratoren der Zellen einer gegebenen vertikalen Zellenreihe der Matrix verbunden ist, wobei die Source-Polarisations-Leiterbahnen mit einer Anschluss- bzw. Verbindungszone (106) verbunden sind, welche an der Matrix angeordnet ist und auf ein Potential Vs gelegt wird,
wobei der Transistor (T₁) darüber hinaus eine Gate-Elektrode aufweist, welche mit einer aus einer Vielzahl von Gate-Polarisations-Leiterbahnen gegebenen Gate-PolarisationsLeiterbahn (107₁, 107₂) verbunden ist, wobei jede Gate-Polarisations-Leiterbahn mit jeweiligen Gate-Elektroden der jeweiligen Stromgeneratortransistoren der Zellen einer horizontalen Zellenreihe der Matrix verbunden ist,
wobei die Anordnung darüber hinaus Mittel zur Polarisation von Gate-Polarisations-Leiterbahnen aufweist, wobei die Mittel Folgendes umfassen:
- zumindest eine erste Anschlussleitung (208);
- in einer oder mehreren Reihen der Matrix: mindestens einen zusätzlichen Transistor (T'₁), welcher so angeordnet ist, dass er jeweils Stromspiegel mit den Stromgenerator-Transistoren (T₁) der Zellen einer horizontalen Reihe der Matrix bildet, wobei der zusätzliche Transistor (T'₁) eine Source-Elektrode aufweist, welche mit der ersten Anschlussleitung verbunden ist;
- Mittel zur Erzeugung einer Veränderung der Potentiale entlang der ersten Anschlussleitung proportional zu oder identisch mit der Veränderung des Potentials in den Source-Polarisations-Leiterbahnen, wobei die Mittel zur Erzeugung einer Veränderung des Potentials Stromerzeugungsmittel (210) zur Erzeugung eines Stroms I₁ quer durch die erste Anschlussleitung (208) durch die Anschlusszone (106), welche auf das Potential Vs gelegt wird, aufweisen, wobei die erste Anschlussleitung (208) mit einem Linearwiderstand (R_lat(i)) vorgesehen ist, welcher identisch oder im Wesentlichen gleich oder proportional zu dem jeweiligen Linearwiderstand (R_pix(i, j)) der Leitungen (105₁, 105₂) zur Polarisation des Source-Anschlusses ist, wobei der Strom I₁ den Stromspiegeln als Eingangsstrom dient.

5. Mikroelektronische Matrixanordnung nach Anspruch 4, wobei eine oder mehrere Reihen der Matrix darüber hinaus Folgendes aufweisen: Schaltereinrichtungen (T'₂), welche durch ein Auswahlsignal (phi_ligne(i)) der Reihe von Zellen gesteuert werden, welche geeignet sind, um in Abhängigkeit von dem Zustand des Auswahlsignals den Strom an den Eingang der Stromspiegel einer Reihe zu übertragen.

6. Mikroelektronische Matrixanordnung nach einem der Ansprüche 4 oder 5, wobei die Stromverstärkung der Stromspiegel gleich 1/K ist (mit K > 1), wobei die erste Anschlussleitung (208) einen linearen Widerstand aufweist, welcher K-mal niedriger als der der Source-Polarisations-Leiterbahnen (105₁, 105₂) ist.

7. Mikroelektronische Matrixanordnung nach einem der Ansprüche 4 oder 5, wobei die Stromverstärkung der Stromspiegel gleich 1 ist, wobei die erste Anschlussleitung (208) identisch mit den Source-Polarisations-Leiterbahnen (105₁, 105₂) ist.

8. Mikroelektronische Matrixanordnung nach einem der Ansprüche 1 bis 7, wobei die erste Anschlussleitung (108, 208) parallel zu den Source-Polarisations-Leiterbahnen (105₁, 105₂) ist.

## Claims

1. Matrix microelectronic device comprising:
- a plurality of elementary cells (100₁₁, 100₁₂, 100₂₁, 100₂₂) laid out according to a matrix, respectively comprising at least one current source formed by at least one current source transistor (T₁), the transistor (T₁) comprising a source electrode that is connected to a source biasing conductor line among a plurality of source biasing conductor lines (105₁, 105₂), each source biasing line being connected to the respective source electrodes of the respective current generator transistors of the cells of a vertical row of cells of the matrix, the source biasing conductor lines being connected to a connection zone (106) at the edge of the matrix and set to a potential Vs,
the transistor (T₁) further comprising a gate electrode connected to a biasing conductor line (107₁, 107₂) among a plurality of conductor gate biasing lines, each gate biasing lines connect the respective gate electrodes of the respective current generator transistors of the cells of an horizontal row of cells of the matrix, the device further comprising means for biasing the conductor gate biasing lines comprising:
- at least one first connection line (108, 218) that is capable of being connected to said conductor gate biasing lines,
- means for generating a variation of potentials along said first connection line, proportional or identical to the variation of potentials in the source biasing conductor lines,
said means comprising voltage generating means (110) connected to said first connection line for applying a first potential (vg₁, vs(i,j)) and for applying a second potential (vg₂, vs(i,j)) between a first end of said first connection line and a second end of said first connection line opposite the first end, first potential being different from said second potential, said first connection line (108) being provided with a linear resistance (R_lat(i)) that is identical or substantially equal or proportional to the respective linear resistance (R_pix(i,j)) of said source biasing lines (105₁, 105₂).

2. Matrix microelectronic device according to claim 1, wherein the first potential (vg₁) and the second potential (vg₂) are provided in function of at least one estimation of a diminution in potential between the ends of at least one source biasing line.

3. Matrix microelectronic device according to claims 1 or 2, said connection line (108) being identical to the source biasing conductor lines.

4. Matrix microelectronic device comprising:
- a plurality of elementary cells (100₁₁, 100₁₂, 100₂₁, 100₂₂) laid out according to a matrix, respectively comprising at least one current source formed by at least one current source transistor (T₁), the transistor (T₁) comprising a source electrode connected to a source biasing conductor line among a plurality of source biasing conductor lines (105₁, 105₂), each source biasing line being connected to the respective source electrodes of the respective current generator transistors of the cells of a vertical row of cells of the matrix, the source biasing conductor lines being connected to a connection zone (106) at the edge of the matrix and set to a potential Vs,
the transistor (T₁) further comprising a gate electrode connected to a biasing conductor line (107₁, 107₂) among a plurality of conductor gate biasing lines, each gate biasing lines being connected to the respective gate electrodes of the respective current generator transistors of the cells of an horizontal row of cells of the matrix, the device further comprising means for biasing the conductor gate biasing lines comprising:
- at least one first connection line (208),
- in one or several rows of the matrix: at least one additional transistor (T'₁) arranged so as to form current mirrors, respectively with the current generator (T₁) transistors of the cells of an horizontal row of the matrix, the additional transistor (T'₁) being provided with a source electrode that is connected to said first connection line,
- means for generating a variation of potentials along said first connection line, proportional or identical to the variation of potentials in the source biasing conductor lines,
said means for generating a variation of potentials comprising current generating means (210) for generating a current I₁ through said first connection line (208) toward said first connection zone (106) set to potential Vs, said first connection line (208) being provided with a linear resistance (R_lat(i)) that is identical or substantially equal or proportional to the respective linear resistance (R_pix(i,j)) of said source biasing lines (105₁, 105₂), said current I₁ serving as an input current to said current mirrors.

5. Matrix microelectronic device according to claim 4, one or several rows of the matrix further comprising: switching means (T'₂) controlled by a signal (phi_line(i)) for selecting a row of cells, that can transmit, in function of the state of said selection signal, said reference current (I₁) to the input of the current mirrors of a row.

6. Matrix microelectronic device according to any of claims 4 or 5, the current gain of the current mirrors being equal to 1/K (where K > 1), wherein the first connection line (208) has a linear resistance K times smaller than that of the source biasing lines (105₁, 105₂).

7. Matrix microelectronic device according to any of claims 4 or 5, the current gain of the current mirrors being equal to 1, the first connection line (208) being identical to the source biasing lines (105₁, 105₂).

8. Matrix microelectronic device according to any of claims 1 to 7, the first connection line (108, 208) being parallel to the source biasing conductor lines (105₁, 105₂).
